# EUROPEAN PATENT APPLICATION

(11) **EP 2 456 277 A1**
(43) Date of publication of application: **23.05.2012**
(21) Application number: 10845084.2
(22) Date of filing: 27.08.2010
(51) Int. Cl.: H04W 76/02

(54) **METHOD FOR ESTABLISHING DATA CHANNELS INITIATED INITIATIVELY BY MOBILE STATION AND ASN SYSTEM**

(30) Priority: 08.02.2010 CN 201010112246
(71) Applicant: ZTE Corporation, Shenzhen, Guangdong 518057 (CN)
(72) Inventor: PANG, Zaihai, Shenzhen Guangdong 518057 (CN); LIU, Junyi, Shenzhen Guangdong 518057 (CN); CAI, Jiannan, Shenzhen Guangdong 518057 (CN)
(74) Representative: Lettau, Christoph
(86) International application number: PCT/CN2010/076425
(87) International publication number: WO 2011/095001

(57) **Abstract**

The present invention discloses a method for establishing a data path initiated actively by a MS and an ASN system, the method includes: in the procedure of establishing the data path initiated actively by the MS, when an Authenticator receives a resource reservation confirmation carrying success identification information, and if local processing is abnormal, then initiating a data path resource deletion request to a DPF; when the DPF receives the data resource deletion request or the data path setup confirmation carrying the success identification information but the local processing is abnormal, sending a data path deletion request to a BS; after the BS receives the data path deletion request, deleting the data path. The present invention avoids serious consequences such as that a user can't use the services or accounting message can't be reported correctly due to the inconsistency of the numbers of the data paths.

## Description

### Technical Field

The present invention relates to a communication field, especially to a method for establishing a data path initiated actively by a mobile station and an ASN (Access Service Network) system.

### Background of the Related Art

With the development of a request for the mobile station and the extensive application of wireless techniques, the development of a Worldwide Interoperability for Microwave Access (WiMAX) technique is more and more rapid, and the prospect is more and more broad.

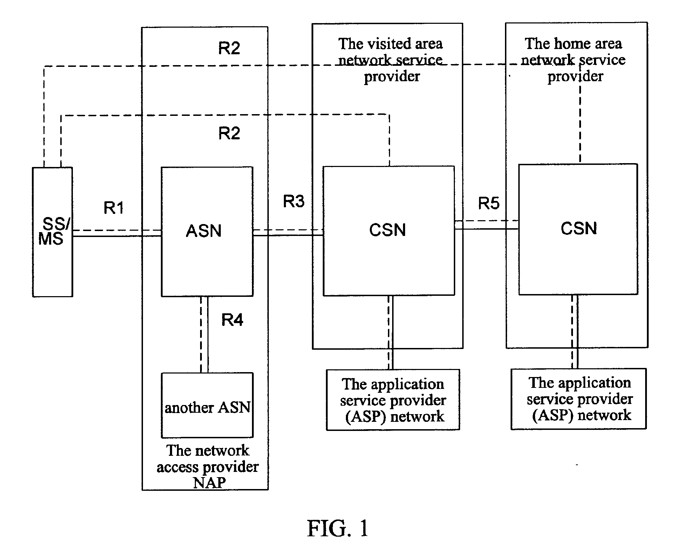

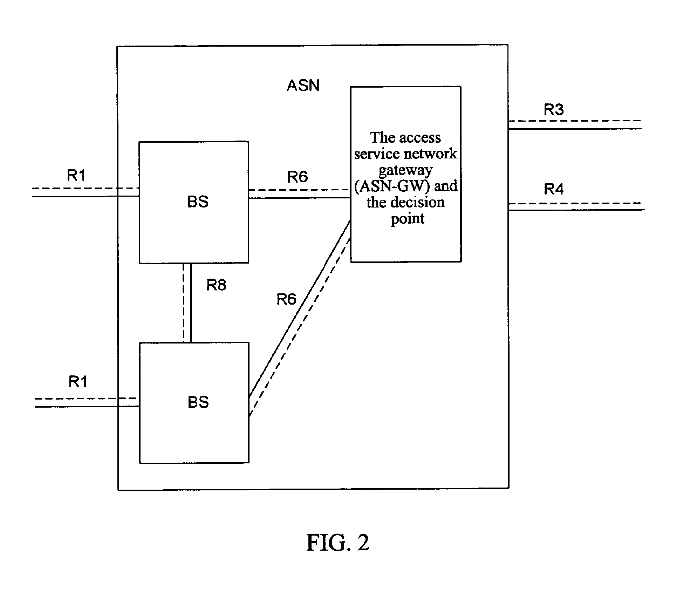

WiMAX is a wireless metropolitan area network technique based on an IEEE802.16 standard, its network reference model is shown in FIG. 1, in which the shown dotted line denotes a control surface, and the solid line denotes a bearing surface. Wherein, CSN is the abbreviation for Connectivity Service Network, MS/SS (Mobile Station/ Subscriber Station) is a mobile station, an ASN is a collection of message flows corresponding to function entities relevant to access services in the WiMAX network system, the mobile station connects with the ASN via a R1 port and connects with the CSN via a R2 port, the ASN connects with the CSN via a R3 port and connects with each other via a R4 port, the CSN connects with each other via a R5 port. The internal structure of the ASN is shown in FIG. 2, wherein an ASN-GW (ASN Gateway) connects with a BS (Base Station) via an internal interface R6 port, wherein the R6 port is comprised of a series of control surface protocols and bearing surface protocols, the BS connects with each other via a R8 port. Further, the ASN-GW further comprises an Authentication Authorization Function Entity (Authenticator), a Data Path Function Entity (DPF) and a Location Management Function Entity (PC (Paging Controller)/LR (Location Register)), the three function entities can be in one physical entity, and can also be on different physical entities.

The BS mainly provides the functions such as wireless resource management, power measurement and control, and air-interface data compression and encryption; in the ASN-GW, the Authenticator mainly provides functions of authentication, authorization and accounting, the DPF mainly provides the path management, and assists a high layer to set up 3 layers' connection with the MS and so on, the PC/LR mainly provides functions such as location management and paging, etc; the CSN is mainly comprised of function entities such as a Home Agent (HA), a Dynamic Host Configuration Protocol (DHCP) server, and an Authentication-Authorization-Accounting (AAA) server, etc, which mainly provide functions such as accounting, authentication, authorization, distributing IP address and Internet service access, etc.

Setting up the data path can be initiated by the ASN-GW, the MS can also initiate the setup of the data path according to the demand of the present service.

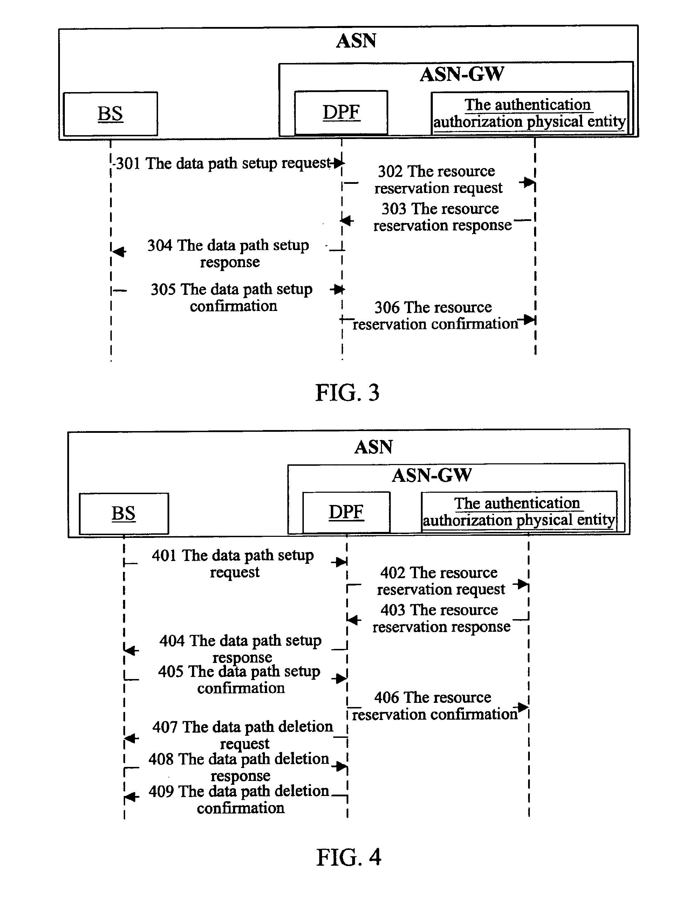

As shown in FIG. 3, the current flow of establishing a data path initiated by the MS comprises the following steps:
301: the BS sends a data path setup request to the DPF;
302: after the DPF receives the above data path setup request, it sends a resource reservation request to an Authenticator;
303: after the Authenticator receives the above resource reservation request, it sends a resource reservation response to the DPF;
304: after the DPF receives the above resource reservation response, it sends a data path setup response to the BS;
305: after the BS receives the above data path setup response, it sends a data path setup confirmation to the DPF, so as to confirm that the data path has been set up;
306: after the DPF receives the above data path setup confirmation, it sends a resource reservation confirmation to the Authenticator.

In the above flow, when multiple data paths are set up in this flow at same time, there will be the following problems:
1. When the DPF receives the data path setup confirmation carrying success identification information (wherein, the success identification information is used for denoting that the data path has been set up successfully), if the local processing is abnormal (such as the local resource is limited), the BS can't be informed, and the BS will still believe that the data path has been set up successfully;
2. When the Authenticator receives the resource reservation confirmation carrying the success identification information (wherein, the success identification information is used for denoting that the data path has been set up successfully), if the local processing is abnormal, then the DPF can't be informed, however, at the present moment, the DPF will still believe that the data path has been set up successfully.

The above two problems will result in the occurrence of the following problems:
A: the number of the data paths on the BS is not equal to that of the data paths on the ASN-GW, the number of the data paths on the BS is greater than that of the data paths on the ASN-GW. When the MS chooses a data path which is on the BS but not on the ASN-GW to perform the service data transmission, then the service data can't be transmitted to the ASN-GW, namely, the regular service can't be performed;
B: under the condition that, inside the ASN-GW, the number of the data paths on the DPF is not equal to that of the data paths on the Authenticator, when a user uses a stream-based accounting model, the user's accounting information can't be correctly reported.

### Summary of the Invention

The technical problems to be solved in the present invention is to provide a method and ASN system for establishing a data path initiated actively by a mobile station, so as to avoid serious consequences such as a user can't perform services or accounting message can't be correctly reported due to the inconsistency of the numbers of the data paths.

In order to solve the above problems, the present invention provides a method for establishing the data path initiated actively by the Mobile Station (MS), the method comprises:

In the procedure of establishing the data path initiated actively by the MS, when an Authentication Authorization Function Entity (Authenticator) receives a resource reservation confirmation carrying success identification information, if a local processing is abnormal, then sending a data path resource deletion request to a Data Path Function Entity (DPF);
when the DPF receives the data path resource deletion request or the data path setup confirmation carrying the success identification information but the local processing is abnormal, sending a data path deletion request to the Base Station (BS); and
after the BS receives the data path deletion request, deleting the data path.

The above method can further comprise:
after the BS receives the data path deletion request, sending a data path deletion response to the DPF.

The above method can further comprise:
after the DPF receives the data path deletion response, sending a data path deletion confirmation to the BS.

The above method can further comprise:
after the DPF receives the data path resource deletion request sent by the Authenticator, sending a data path resource deletion response to the Authenticator.

The above method can further comprise:
after the Authenticator receives the data path resource deletion response, sending a data path deletion confirmation to the DPF.

The above method can further comprise:
after the DPF receives the data path setup confirmation carrying the success identification information but the local processing is abnormal, sending a resource reservation confirmation carrying failure identification information to the Authenticator.

The present invention further provides an Access Service Network (ASN) system, wherein, it comprises: an Authentication Authorization Function Entity (Authenticator), a Data Path Function Entity (DPF) and a Base Station (BS);
the Authenticator is configured to: in the procedure of establishing the data path initiated actively by the Mobile Station (MS), when receiving the resource reservation confirmation carrying the success identification information, if the local processing is abnormal, then initiate a data path resource deletion request to the DPF;
the DPF is configured to: when receiving the data path resource deletion request or the data path setup confirmation carrying the success identification information but the local processing is abnormal, send a data path deletion request to the BS;
the BS is configured to: after receiving the data path deletion request, delete the data path.

The above ASN can further have the following characteristics:
the BS is further configured to: after receiving the data path deletion request, send a data path deletion response to the DPF;
the DPF is further configured to: after receiving the data path deletion response, send a data path deletion confirmation to the BS.

The above ASN can further have the following characteristics:
the DPF is further configured to: after receiving the data path resource deletion request sent by the Authenticator, send a data path resource deletion response to the Authenticator;
the Authenticator is further configured to: after receiving the data path resource deletion response, send a data path deletion confirmation to the DPF.

The above ASN can further have the following characteristics:
the DPF is further configured to: after receiving the data path setup confirmation carrying the success identification information but the local processing is abnormal, send a resource reservation confirmation carrying failure identification information to the Authenticator.

Compared with the related art, adopting the present invention can keep the consistency of the number of the data paths of each user on the network element, avoid serious consequences such as a user can't perform the services or accounting message can't be correctly reported due to the inconsistency of the numbers of the data paths.

### Brief Description of Drawings

FIG. 1 is a schematic diagram of the architecture of a WiMAX system according to the prior art;
FIG. 2 is a structural schematic diagram of an ASN according to the prior art;
FIG. 3 is a flow chart of establishing a data path initiated actively by an MS according to the prior art;
FIG. 4 is a flow chart of establishing a data path initiated actively by an MS according to the example one of the present invention;
FIG. 5 is a flow chart of establishing a data path initiated actively by an MS according to the example two of the present invention.

### Preferred Embodiments of the Present Invention

The following gives a specific illustration on the technical scheme of the present invention with reference to the appended drawings and the examples.

The basic conception of the method in the present invention is: in the procedure of establishing the data path initiated actively by the MS, when the Authenticator receives a resource reservation confirmation carrying the success identification information, and if local processing is abnormal, then initiating a data path resource deletion request to the DPF, so as to trigger the deletion flow of the data path;
when the DPF receives the data path resource deletion request sent by the Authenticator or the data path setup confirmation carrying the success identification information but the local processing is abnormal, sending a data path deletion request to the BS. After the BS receives the data path deletion request, it will delete the above data path.

In addition, after the BS receives the data path deletion request sent by the DPF, the BS can further send the data path deletion response to the DPF. And after the DPF receives the data path deletion response, it can send the data path deletion confirmation to the BS.

After the DPF receives the data path deletion request sent by the Authenticator, it still needs to send the data path resource deletion response to the Authenticator. After the Authenticator receives the data path resource deletion response, it can send the data path deletion confirmation to the DPF.

When the DPF receives the data path setup confirmation carrying the success identification information but the local processing is abnormal, it can further send the resource reservation confirmation carrying the failure identification information to the Authenticator, so as to inform the Authenticator of the failure of the path setup.

Correspondingly, the present invention further provides an ASN system, which comprises: an Authenticator, a DPF and a BS;
the Authenticator is used to, in the procedure of establishing the data path initiated actively by the MS, when the Authenticator receives the resource reservation confirmation carrying the success identification information, if the local processing is abnormal, send the data path resource deletion request to the DPF;
the DPF is used to, when it receives the above data path resource request or the data path setup confirmation carrying the success identification information but the local processing is abnormal, send the data path deletion request to the BS;
the BS is used to, after it receives the data path deletion request, delete the data path.

Further, the BS can be further used to, after receiving the data path deletion request, send the data path deletion response to the DPF; the DPF can be further used to, after receiving the data path deletion response, send the data path deletion confirmation to the BS. The DPF can be further used to, after receiving the data path resource deletion request sent by the Authenticator, send the data path resource deletion response to the Authenticator; the Authenticator can be further used to, after receiving the data path resource deletion response, send the data path deletion confirmation to the DPF. The DPF can be further used to, after receiving the data path setup confirmation carrying the success identification information but the local processing is abnormal, send the resource reservation confirmation carrying the failure identification information to the Authenticator.

The following further illustrates the method of the present invention with reference to the two application examples of the present invention.

The application example one

As shown in FIG. 4, the procedure of establishing a data path initiated by the MS mainly comprises the following steps:
step 401: the BS sends the data path setup request to the DPF;
step 402: after the DPF receives the above data path setup request, it sends the resource reservation request to the Authenticator;
step 403: after the Authenticator receives the above resource reservation request, it sends the resource reservation response to the DPF;
step 404: after the DPF receives the above resource reservation response, it sends the data path setup response to the BS;
step 405: after the BS receives the above data path setup response, it sends the data path setup confirmation to the DPF, so as to confirm that the data path has been set up;
step 406: the DPF receives the path setup confirmation message carrying the success identification information, but the processing of the DPF itself is abnormal, then it sends the resource reservation confirmation message carrying the failure identification information to the Authenticator, so as to inform the Authenticator the failure of the data setup. Wherein, the failure identification information is used for denoting the failure of the path setup;
step 407: the DPF sends the data path deletion request to the BS, so as to request the BS to delete the data path which is not established successfully at the present time;
step 408: the BS deletes the corresponding data path and sends the data path deletion response to the DPF;
step 409: the DPF sends the data path deletion confirmation to the BS, so as to confirm that the path has been deleted.

Wherein, it should be illustrated that, there is no time sequence relationship between the above step 406 and the step 407, the execution of the steps is in random order.

The application example two

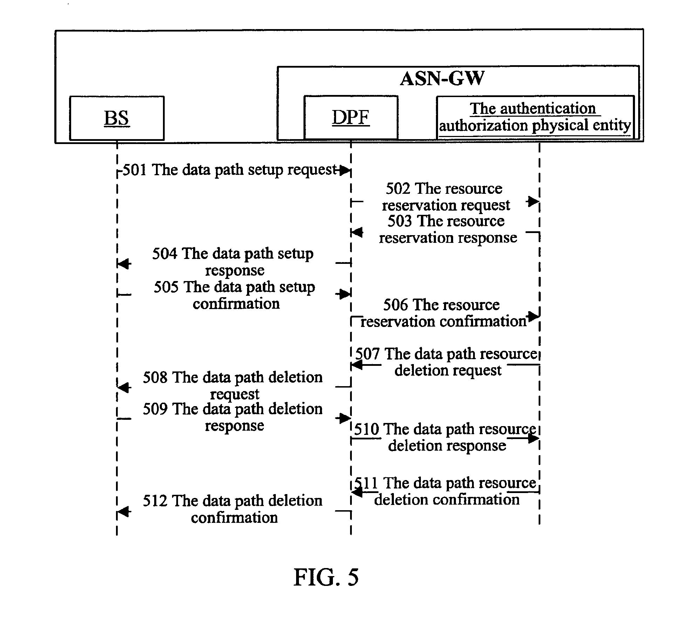

As shown in FIG. 5, the procedure of establishing a data path initiated by the MS mainly comprises the following steps:
step 501: the BS sends the data path setup request to the DPF;
step 502: after the DPF receives the above data path setup request, it sends the resource reservation request to the Authenticator;
step 503: after the Authenticator receives the above resource reservation request, it sends the resource reservation response to the DPF;
step 504: after the DPF receives the above resource reservation response, it sends the data path setup response to the BS;
step 505: after the BS receives the above data path setup response, it sends the data path setup confirmation to the DPF, so as to confirm that the data path has been set up;
step 506: after the DPF receives the above data path setup confirmation, it sends the resource reservation confirmation to the Authenticator;
step 507: the Authenticator receives the successful resource reservation confirmation message, but the processing of itself is abnormal, then actively initiates the data path resource deletion request to the DPF;
step 508: after the DPF receives the data path resource deletion request sent by the Authenticator, it sends the data path deletion request to the BS;
step 509: after the BS receives the above data path deletion request, it deletes the corresponding data path and sends the data path deletion response to the DPF;
step 510: after the DPF receives the data path deletion response, it sends the data path resource deletion response to the Authenticator;
step 511: after the Authenticator receives the data path resource deletion response, send the data path resource deletion confirmation to the DPF;
step 512: the DPF sends the data path deletion confirmation to the BS, so as to confirm that the data path has been deleted. It should be illustrated that, there is no particular execution order for step 512 and the step 510, namely, after the DPF receives the data path deletion response, it can send the data path deletion confirmation to the BS and send the data path resource deletion response to the Authenticator, the order for sending the two pieces of message have no effect on the implementing of the present invention.

For the purpose of illustration, the preferred embodiments of the present invention have been disclosed, however, the skilled in the art will realize that various kinds of improvements, additions and replacements is possible, therefore, the scope of the present invention shall not be limited to the above embodiments.

The ordinary skilled in the art can understand that all of or parts of the steps in the above method can be completed by instructing the relevant hardware with a program, the program can be stored in the readable storage medium of a computer, such as read-only memory, discs and light disks, etc. Alternatively, all of or parts of the steps of the above examples can also use one or more integrated circuit to implement. Correspondingly, each module/unit in the above examples can be implemented in the form of hardware, and can also be implemented in the form of software function module. The present invention is not limited to any certain form of combination of hardware and software.

### Industrial Applicability

By the present invention, the numbers of the data paths of each user on the network element can be kept consistent, and the serious consequences, such as that a user can't use services or accounting message can't be correctly reported, due to the inconsistency of the numbers of the data paths, could be avoided.

## Claims

1. A method for establishing a data path initiated actively by a Mobile Station (MS), comprising:
in a procedure of establishing a data path initiated actively by the MS, when an Authentication Authorization Function Entity (Authenticator) receives a resource reservation confirmation carrying success identification information, if local processing is abnormal, then sending a data path resource deletion request to a Data Path Function Entity (DPF);
when the DPF receives the data path resource deletion request or a data path setup confirmation carrying the success identification information but the local processing is abnormal, sending a data path deletion request to a Base Station (BS); and
after the BS receives the data path deletion request, deleting the data path.

2. The method according to claim 1, further comprising:
after the BS receives the data path deletion request, sending a data path deletion response to the DPF.

3. The method according to claim 2, further comprising:
after the DPF receives the data path deletion response, sending a data path deletion confirmation to the BS.

4. The method according to any of claims 1-3, further comprising:
after the DPF receives a data path resource deletion request sent by the Authenticator, sending a data path resource deletion response to the Authenticator.

5. The method according to claim 4, further comprising:
after the Authenticator receives the data path resource deletion response, sending a data path deletion confirmation to the DPF.

6. The method according to any of claims 1-3, further comprising:
after the DPF receives the data path setup confirmation carrying the success identification information but the local processing is abnormal, sending a resource reservation confirmation carrying failure identification information to the Authenticator.

7. An Access Service Network (ASN) system, comprising: an Authentication Authorization Function Entity (Authenticator), a Data Path Function Entity (DPF) and a Base Station (BS),
the Authenticator is configured to: in a procedure of establishing a data path initiated actively by a Mobile Station (MS), when receiving a resource reservation confirmation carrying success identification information, if local processing is abnormal, then initiate a data path resource deletion request to the DPF;
the DPF is configured to: when receiving the data path resource deletion request or a data path setup confirmation carrying the success identification information but the local processing is abnormal, send a data path deletion request to the BS;
the BS is configured to: after receiving the data path deletion request, delete the data path.

8. The ASN system according to claim 7, wherein,
the BS is further configured to: after receiving the data path deletion request, send a data path deletion response to the DPF;
the DPF is further configured to: after receiving the data path deletion response, send a data path deletion confirmation to the BS.

9. The ASN system according to claim 7 or 8, wherein,
the DPF is further configured to: after receiving the data path resource deletion request sent by the Authenticator, send a data path resource deletion response to the Authenticator;
the Authenticator is further configured to: after receiving the data path resource deletion response, send a data path deletion confirmation to the DPF.

10. The ASN system according to claim 7 or 8, wherein,
the DPF is further configured to: after receiving the data path setup confirmation carrying the success identification information but the local processing is abnormal, send a resource reservation confirmation carrying failure identification information to the Authenticator.
